# EUROPÄISCHE PATENTSCHRIFT

(11) **EP 2 748 796 B1**
(45) Veröffentlichungstag und Bekanntmachung des Hinweises auf die Patenterteilung: **30.05.2018**
(21) Anmeldenummer: 12728182.2
(22) Anmeldetag: 14.06.2012
(51) Int. Cl.: G06T 7/00, G06T 7/12, A24C 5/34, A47J 31/36, B65B 19/30, B65B 19/32

(54) **VERFAHREN UND VORRICHTUNG ZUM PRÜFEN STABFÖRMIGER TABAKPRODUKTE**
METHOD AND APPARATUS FOR TESTING ROD-SHAPED TOBACCO PRODUCTS
PROCÉDÉ ET PROCESSUS POUR TESTER DES PRODUITS DE TABAC EN FORME DE BÂTON

(30) Priorität: 22.08.2011 DE 102011110783
(43) Veröffentlichungstag der Anmeldung: 02.07.2014
(73) Patentinhaber: Focke & Co. (GmbH & Co. KG), 27283 Verden (DE)
(72) Erfinder: KRAL, Vincent, 28203 Bremen (DE)
(74) Vertreter: Aulich, Martin
(86) Internationale Anmeldenummer: PCT/EP2012/002500
(87) Internationale Veröffentlichungsnummer: WO 2013/026504

(56) Entgegenhaltungen:
- EP-A1- 0 653 170
- EP-A1- 1 674 395
- EP-A2- 0 704 172
- WO-A1-2004/083834
- DE-A1- 19 921 725
- DE-A1-102006 048 236
- SINZINGER E D: "Radial segmentation", PATTERN RECOGNITION LETTERS, ELSEVIER, AMSTERDAM, NL, Bd. 25, Nr. 12, 1. September 2004 (2004-09-01), Seiten 1337-1350, XP004527225, ISSN: 0167-8655, DOI: 10.1016/J.PATREC.2004.05.012

## Beschreibung

Die vorliegende Erfindung betrifft ein Verfahren zum Prüfen von Produkten der Tabakindustrie mit jeweils im Wesentlichen kreisförmiger Stirnseitenkontur, bei dem mittels eines elektrooptischen Prüforgans, bevorzugt einer Kamera, ein elektronisches Bild der Stirnseite mindestens eines Produktes aufgenommen wird, wobei das aufgenommene Bild zur Erkennung des Produktes in dem Bild ausgewertet wird. Des Weiteren betrifft die Erfindung eine Vorrichtung zur Durchführung des Verfahrens.

Produkte der Tabakindustrie, insbesondere Zigaretten, müssen im Produktionsablauf diversen Kontrollen unterworfen werden. Einige der Kontrollen sind optischer Natur. Dabei werden von den Produkten Bilder aufgenommen und ausgewertet. Im Rahmen der Auswertung ist es in der Regel notwendig, die Produkte in dem aufgenommen Bild automatisiert zu erkennen, um eine nachfolgende Prüfung auf Fehler etc. durchführen zu können. Die Bildaufnahme erfasst in der Regel nicht nur das zu prüfende Produkt selbst, sondern auch die Produktumgebung.

Die Erkennung wird unter anderem dadurch erschwert, dass die Positionen der Produkte, in denen sie geprüft werden, nicht zuletzt aufgrund der hohen Fertigungsgeschwindigkeiten in der Zigarettenindustrie, von Prüfvorgang zu Prüfvorgang häufig leicht variieren. Wenn beispielsweise die Stirnseiten von Zigaretten von in einer Tasche eines Revolvers angeordneten Zigarettenformationen optisch geprüft werden sollen, kann sich die exakte Lage der einzelnen Zigaretten in der der Tasche von Formation zu Formation leicht unterscheiden. Mithin würde auch die Lage der Stirnseiten in von den Formationen aufgenommen Bildern immer leicht differieren.

In der WO 2011/064857 wird beispielsweise vorgeschlagen, die Zigaretten in einem Bild einer Zigarettenformation anhand eines hinterlegten Referenzmusters zu erkennen. Nachteilig hierbei ist unter anderem, dass für jede neue, abweichende Formation der Zigaretten neue Referenzmuster hinterlegt werden müssen. Dies ist zeit- und kostenintensiv.

Die EP 0 704 172 A2 zeigt ein Verfahren, mit dem mittels eines elektrooptischen Prüforgans unter anderem Stirnseiten von Zigaretten geprüft werden können.

Die Druckschrift "Radial segmentation" von Sinzinger, Pattern Recognition Letters, Elsevier, Amsterdam, Nl, Bd. 25, Nr. 12, 1. September 2004, S. 1337-1350, befasst sich in abstrakter Weise mit einem Bildauswerteverfahren, das als radiale Segmentierung bezeichnet wird. Mit diesem Verfahren sollen Ecken von Bildobjekten erkannt werden, insbesondere Ecken eines Würfels oder dergleichen.

Ausgehend hiervon ist es Aufgabe der vorliegenden Erfindung, das eingangs genannte Verfahren und die eingangs genannte Vorrichtung zum Prüfen von Produkten der Tabakindustrie mit kreisförmiger Stirnseite weiterzuentwickeln.

Diese Aufgabe wird gelöst durch ein Verfahren mit den Merkmalen des Anspruchs 1, sowie eine Vorrichtung mit den Merkmalen des Anspruchs 13.

Danach werden das aufgenommene Bild bzw. aufgenommene Bildinformationen zunächst zur Erkennung des Produktes in dem Bild bzw. zur Ermittlung der Position der Stirnseite des Produktes in dem Bild entlang von mindestens drei unterschiedlichen Auswertelinien ausgewertet. Im Rahmen der Auswertung der Bildinformation entlang dieser Auswertelinien werden auf den Auswertelinien liegende Randpunkte der Kontur des Produktes ermittelt. Aus mindestens drei, vorzugsweise mindestens zehn ermittelten Randpunkten wird der Mittelpunkt eines sich durch die Randpunkte erstreckenden Kreises errechnet. Die Auswertelinien erstrecken sich dabei jeweils von einer inneren Bildposition, an der in dem auszuwertenden Bild das Abbild der Stirnseite des Produktes erwartet wird, bis zu einer äußeren Bildposition, in der in dem auszuwertenden Bild das Abbild der Umgebung der Stirnseite der Produktes erwartet wird.

Die Erfindung dient zur Prüfung von Produkten mit im Wesentlichen kreisförmigen Stirnseitenkonturen. Es sollen dabei von der Erfindung neben der Prüfung von Produkten mit exakt kreisförmigen Stirnseitenkonturen insbesondere auch von einer exakten Kreisform abweichende, ellipsenförmige Stirnseitenkonturen umfasst sein,

Die Prüfung der Produkte erfolgt in einer entsprechenden Prüfvorrichtung mit elektrooptischem Prüforgan, wie etwa einer Kamera. Dabei umfasst die Prüfvorrichtung eine geeignet ausgebildete Auswerteinrichtung, mit der die aufgenommenen Bilder bzw. die Bildinformationen insbesondere automatisiert ausgewertet werden können. Bei der Auswerteeinrichtung, ggf. als Teil einer Steuereinrichtung der Prüfvorrichtung, kann es sich beispielsweise um eine Computereinrichtung handeln, auf der die erfindungsgemäßen Verfahren in geeigneter Weise softwaretechnisch umgesetzt sind.

Bei den oben genannten Auswertelinien kann es sich letztlich um gedachte bzw. virtuelle Linien handeln, entlang derer in dem auszuwertenden Bild in der beschriebenen Weise Bildinformationen ausgewertet werden. Sie können kontinuierlich oder diskontinuierlich sein. Sie verlaufen bevorzugt geradlinig, d.h. die auszuwertenden Bildeinheiten des Bildes, die entlang der bzw. auf den Auswertelinien liegen, liegen jeweils auf geraden bzw. linearen (Auswerte-)Linien. Es liegt aber auch im Rahmen der Erfindung, gekrümmte Auswertelinien oder dergleichen vorzusehen. Weiter müssen naturgemäß nicht sämtliche Bildinformationen bzw. sämtliche Bildeinheiten, die entlang der Auswertelinien liegen, ausgewertet werden. Es kann auch auf die Auswertung einzelner Bildeinheiten verzichtet werden, beispielsweise um die Auswertung zu beschleunigen.

Die Festlegung der Positionen der Auswertelinien bzw. allgemein der Bildpositionen, an dem in dem auszuwertenden Bild die Stirnseite des Produktes bzw. die Umgebung der Stirnseite des Produktes erwartet wird, kann dabei nach Maßgabe einer Analyse eines Soll- bzw. Referenzbildes erfolgen, das von einem Referenzprodukt in der (Referenz-)Prüfposition aufgenommen wurde. Beispielsweise bei der Prüfung von Stirnseiten von Zigaretten einer Zigarettenformation in einer Tasche eines Revolvers, kann ein Referenzbild einer in der Tasche angeordneten Referenzzigarettenformation aufgenommen werden. Dieses Referenzbild wird analysiert und es werden dabei die erwarteten bzw. die Soll- bzw. Referenzpositionen der in dem Bild angeordneten Referenzzigaretten bzw. der Stirnseiten derselben ermittelt. Diese Postionen bilden dann die erwarteten bzw. Soll-Positionen, anhand derer dann unter anderem die Auswertelinien festgelegt werden.

Die Auswertelinien, die den Soll-Positionen zugeordnet werden, sind letztlich so vorzusehen, dass erwartet werden kann, dass die jeweiligen Auswertelinien die Kontur bzw. den äußeren Rand des Abbildes der Stirnseite des Produktes schneiden.

Bevorzugt erstrecken sich die Auswertelinien von einem inneren Kreis, der in einem Bildbereich angeordnet ist, in dem in dem Bild die Produktstirnseite erwartet wird, bis zu einem äußeren Kreis, der in einem Bildbereich angeordnet ist, in dem die Umgebung der Produktstirnseite erwartet wird. Dabei werden in der Regel der innere Kreis und der äußere Kreis einen gemeinsamen (Soll-)Mittelpunkt aufweisen, der einem erwarteten Zentrum des Produktes in dem Bild entspricht.

Der (Ist-)Mittelpunkt des in der oben beschriebenen Weise aus den Randpunkten der Produktkontur errechneten Kreises bildet dann in der Regel das Zentrum bzw. den Mittelpunkt der Stirnseite des tatsächlich geprüften Produktes bzw. des Abbildes der Stirnseite desselben in dem auszuwertenden Bild. Der Kreis selbst bildet mindestens annähernd die Kontur der Produktstirnseite. Das erfindungsgemäße Verfahren erlaubt daher, in einem aufgenommenen Bild, in dem das Abbild der Produktstirnseite enthalten ist, ohne den Vergleich mit Referenzbildern des Produktes anhand von mittels (gedachten bzw. virtuellen) Auswertelinien bestimmten Randpunkten der Produktkontur die Lage bzw. Position der Produktstirnseite im aufgenommene Bild zu errechnen.

Für die Bestimmung der Randpunkte der Produktkontur werden vorteilhafterweise verschiedenen Positionen bzw. Positionsangaben von Bildeinheiten, in der Regel Bildpunkten, die sich in dem Bild auf den Auswertelinien befinden, Bildinformationen, die zu diesen Bildeinheiten gehören, gegenübergestellt, vorteilhafterweise in einem Diagramm und/oder einer Tabelle. Beispielsweise kann der Entfernung von jeweils auf den Auswertelinien liegenden Bildeinheiten in dem aufgenommenen Bild von einem erwarteten Zentrum bzw. einem erwarteten Mittelpunkt der Stirnseite des zu prüfenden Produktes in dem Bild, eine zu der jeweiligen Bildeinheit gehörende Bildinformation, wie etwa ein Helligkeitswert der Bildeinheit, gegenübergestellt werden.

Die in dieser Weise diesen Positions- bzw. Ortsangaben gegenübergestellten Bildinformationen werden dann im Hinblick auf positionsbezogene, lokale Maxima (oder, abhängig von den auszuwertenden Bildinformationen gegebenenfalls auch Minima) der Werte der Bildinformationen geprüft bzw. ausgewertet.

Was die Bildinformationen betrifft, die entlang der Auswertelinien ausgewertet werden, so kann es sich im einfachsten Fall um Helligkeitsinformationen handeln. Zusätzlich oder alternativ können erfindungsgemäß Farbinformationen des Bildes ausgewertet werden. Denkbar ist auch die Auswertung von Tiefeninformationen, wie sie beispielsweise von sogenannten 3D-Kameras aufgenommen werden können.

Vorzugsweise wird die Produktstirnseite des mindestens einen zu prüfenden Produktes während des Prüfvorgangs von einer Beleuchtungseinrichtung beleuchtet. Insbesondere in einem solchen Fall können als Bildinformationen den entsprechenden Bildeinheiten in dem Bild zugeordnete Helligkeitswerte ausgewertet werden.

In einer besonders wichtigen Ausführungsform der Erfindung werden mehrere Produktstirnseiten einer Formation bzw. Gruppe von Produkten in der oben beschriebenen Weise in dem aufgenommen Bild erkannt bzw. deren Positionen in dem Bild bestimmt. Für jedes Produkt in dem Bild der Produktformation erfolgt dabei in der oben beschriebenen Weise die Auswertung der Bildinformation des aufgenommenen Bildes entlang der mindestens drei Auswertelinien, die sich jeweils von der inneren Bildposition, an dem die jeweilige Produktstirnseite erwartet wird, bis zu der äußeren Bildposition erstrecken, in dem die Umgebung der jeweiligen Produktstirnseite der Produktformation erwartet wird. Dabei werden für jedes Produkt in dem Bild der Produktformation die auf den Auswertelinien liegenden Randpunkte der jeweiligen Produktkontur ermittelt und entsprechend für jedes Produkt der Mittelpunkt des sich durch die Randpunkte erstreckenden Kreises errechnet.

Was die Auswertung von Bildinformationen in dieser Ausführungsform der Erfindung betrifft, so kann sie für ein Produkt, das in einer Position in der Produktformation mit weniger unmittelbar angrenzenden Produktnachbarn angeordnet ist, entlang einer kleineren Anzahl von Auswertelinien erfolgen, als für ein Produkt, das in einer Position in der Produktformation mit mehr unmittelbar angrenzenden Produktnachbarn angeordnet ist.

Denn je mehr Produkte an das Produkt der Produktformation angrenzen, dessen Stirnseite in dem aufgenommenen Bild erkannt werden soll, desto schwieriger wird in der Regel die Bestimmung der für die Kreisberechnung notwendigen Randpunkte der Produktkontur. Denn in den Bereichen, in denen die benachbarten Produkte unmittelbar an dem zu prüfenden Produkt anliegen, sind die Randkonturen der Stirnseiten des zu prüfenden Produktes häufig nicht exakt ermittelbar, da die aneinander anliegenden Stirnseiten gegebenenfalls quasi ineinander übergehen.

Bei den zu prüfenden Produktstirnseiten der Produktformation handelt es sich bevorzugt - wie weiter oben bereits angedeutet - um Stirnseiten von Filtern einer Formation von Zigaretten. So können beispielsweise die Filterstirnseiten einer Zigarettengruppe bzw. Zigarettenformation optisch geprüft werden, die sich in der Tasche eines rotierend angetriebenen Revolvers befindet.

Wenn in dieser Konstellation entlang der Auswertelinien genau ein lokales Maximum der Helligkeitswerte auftritt, befindet sich an der dem Maximum entsprechenden Bildposition in der Regel ein Punkt des Abbildes der Randkontur bzw. der Randkante der Filterstirnseite. Denn die Filterrandkante erscheint in dem aufgenommenen Bild als besonders heller Bereich, da die Filterrandkante das Licht der oben erwähnten Beleuchtungseinrichtung besonders stark streut bzw. in Richtung des Prüforgans reflektiert. Wenn zwei Maxima auftreten, würde das Maximum, das entlang der Auswertelinie dem erwarteten Mittelpunkt des Produktes näher liegt, durch die Randkante der Filterstirnseite der an dieser Position erwarteten Zigarette entsprechen. Das zweite Maximum würde durch eine Filterrandkante einer in der Formation benachbarten Zigarette erzeugt werden.

In weiterer Ausbildung der Erfindung wird nach Maßgabe des in der weiter oben beschriebenen Weise errechneten Mittelpunktes des sich durch die ermittelten Randpunkte der Stirnseitenkontur des zu prüfenden Produkts erstreckenden Kreises ein Prüffenster festgelegt, in dem das aufgenommene Bild im Hinblick auf Fehler des Produktes in dem Prüffenster ausgewertet wird.

Mit anderen Worten erfolgt im Anschluss an die automatische (Lage-)Erkennung der Stirnseiten der Produkte im aufgenommenen Bild eine weitergehende Auswertung des Bildes. Hierbei können übliche Bildauswerte- bzw. Prüfalgorithmen verwendet werden, die zur Erkennung von Produktfehlern geeignet sind. Beispielsweise können Hell-/Dunkel-Analysen im Prüffenster erfolgen, Mustererkennungen oder auch Vergleiche der Bildinformationen im Prüffenster mit hinterlegten Referenzbildern. Solche Bildauswertungen können beispielsweise Aufschluss geben über Verschmutzungen auf den Produktstirnseiten.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus den beigefügten Zeichnungen. Darin zeigt:
- Fig. 1: einen Schnitt durch einen Teil einer Verpackungsmaschine für Zigaretten, in dem Zigaretten unter Bildung von Gruppen bzw. Formationen einem rotierendem Revolver zugeführt und anschließend weitergefördert werden,
- Fig. 2: einen Schnitt der Darstellung aus Fig. 1 entlang der Schnittlinie II-II, der eine Prüfvorrichtung zur Prüfung der in dem Revolver gebildeten Zigarettenformationen bzw. Zigaretten zeigt,
- Fig.3: einen Schnitt durch die Darstellung aus Fig. 2 entlang der Schnittlinie III-III,
- Fig. 4: ein mit der Prüfvorrichtung aufgenommenes Bild einer zu prüfende Zigarettenformation in einer Tasche des Revolvers in einer Ansicht von vorne,
- Fig. 5: einen Ausschnitt des Bildes der Tasche aus Fig. 4 in vergrößerter Darstellung,
- Fig. 6: vier Diagramme, die Helligkeitsmesswerte entlang von vier Auswertelinien in mit der Prüfvorrichtung aufgenommenen Bildern der Tasche mit darin angeordneter Zigarettenformation zeigen,
- Fig. 7: das Bild aus Fig. 5 mit eingezeichneten Prüffenstern zur Prüfung der Zigaretten,
- Fig. 8: einen Ausschnitt eines weiteren Bildes einer Zigarettenformation analog zu Fig. 5, in der in einer vorgesehenen Zigarettenposition eine Zigarette fehlt,
- Fig. 9: einen Schnitt durch den vorderen Teil einer Hohlfilterzigarette,
- Fig. 10: einen Ausschnitt eines Bildes entsprechend Fig. 5 einer Formation von Hohlfilterzigaretten.

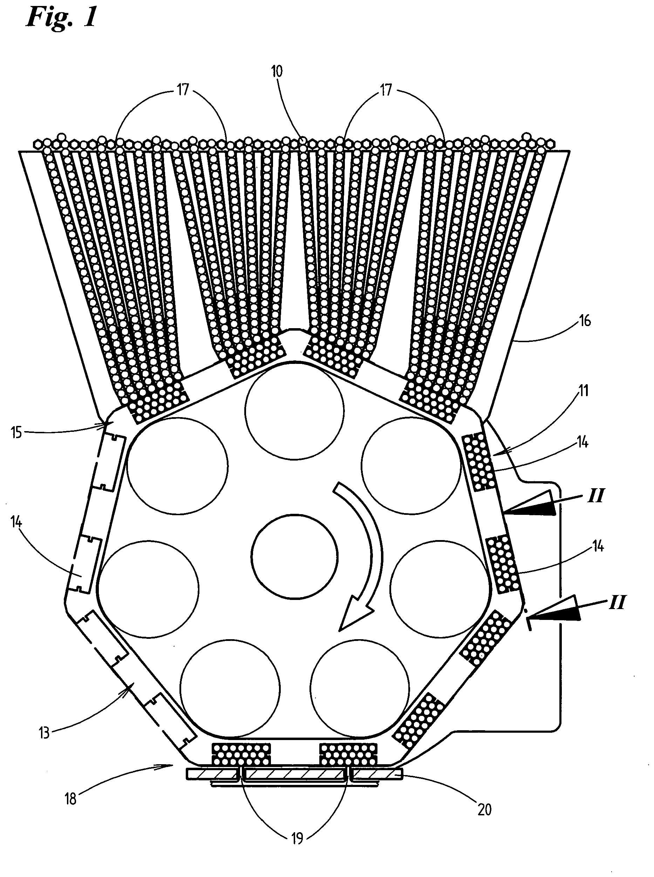

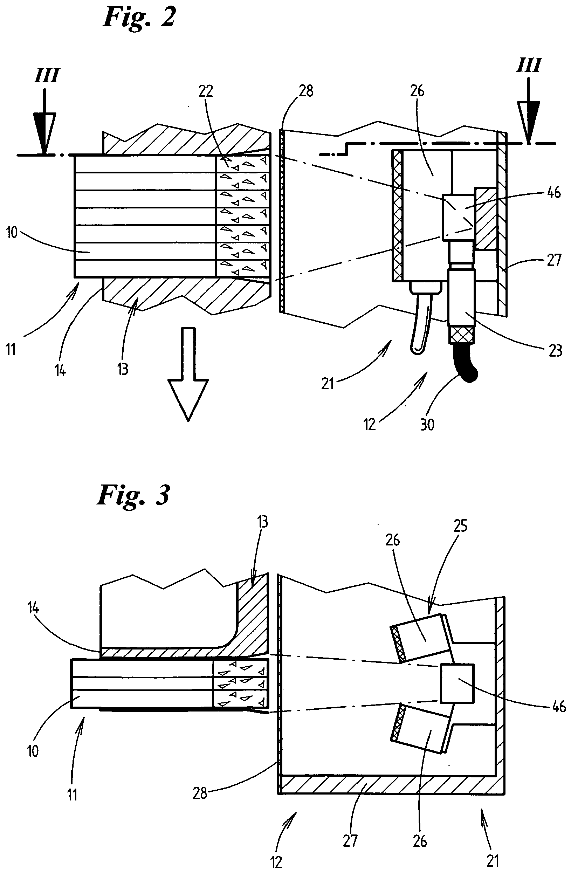

Anhand der Fig. 1-10 werden ein erfindungsgemäßes Verfahren sowie eine erfindungsgemäße Vorrichtung zum Prüfen von Produkten der Tabakindustrie mit im vorliegenden Fall jeweils exakt kreisförmiger Stirnseite näher erläutert.

Im vorliegenden Fall handelt es sich um Tabakprodukte, nämlich Zigaretten 10, die als Formation 11 aus drei übereinander angeordneten Zigarettenlagen mittels einer Prüfvorrichtung 12 optisch geprüft werden. Grundsätzlich können auch andere Produkte der Tabakindustrie, wie etwa Zigarillos, oder andere Gegenstände bzw. (Vor-)Produkte, wie etwa einzelne Filter oder dergleichen, mit dem erfindungsgemäßen Prüfverfahren bzw. der Prüfvorrichtung 12 geprüft werden.

Die Prüfung der Gruppen aus Zigaretten 10 bzw. der Zigarettenformationen 11 erfolgt vorliegend in einem in Fig. 1 gezeigten Bereich einer ansonsten nicht näher dargestellten Verpackungsmaschine zur Verpackung der Zigaretten 10, in dem die Zigaretten 10 gruppenweise unter Bildung der Formation 11 einem rotierendem Revolver 13 zugeführt werden. Der rotierende Revolver 13 verfügt über im Bereich des Umfangs verteilte Aufnahmen bzw. Taschen 14. Die Zigaretten 10 werden als Formation 11 in einer Einschubstation 15 in die Taschen 14 eingeschoben. Sie sind in den Taschen 14 achsparallel zur Revolverdrehachse ausgerichtet. Jede Zigarettenformation 11 wird in ihrer jeweiligen Tasche 14 radial außen durch Haltebleche 29 gegen ein Herausfallen aus den Taschen 14 während der Rotationsbewegungen des Revolvers 13 gesichert.

Die Zigaretten 10 entstammen einem in einer Vertikalebene angeordneten Zigarettenmagazin 16. Das Zigarettenmagazin 16 umfasst in an sich bekannter Weise mehrere Schächte 17, in denen die einzelnen Zigaretten 10 horizontal ausgerichtet übereinanderliegen.

Bei stillstehendem Revolver 13 werden obere, entlang eines nicht dargestellten Zigarettentisches der Einschubstation 15 ausgerichtete Taschen 14 mit den Zigaretten 10 befüllt. Jeder der oberen Taschen 14 ist dabei jeweils ein die Zigaretten 10 in die Taschen 14 schiebender, nicht dargestellter Zigarettenstößel zugeordnet. Jeweils die unteren drei Reihen von Zigaretten 10 werden unter Bildung der Zigarettengruppe bzw. der Formation 11 durch die Zigarettenstößel aus dem jeweiligen Schacht 17 des Zigarettenmagazins 16 entlang des nicht dargestellten Zigarettentisches in die einzelnen Taschen 14 eingeschoben.

Nach dem Befüllvorgang wird der Revolver 13 entlang der Pfeilrichtung in der Fig. 1 weiterbewegt, bis die nächste Gruppe von zu diesem Zeitpunkt noch unbefüllten Taschen 14 entlang des Zigarettentisches der Einschubstation 15 ausgerichtet ist.

Die in Fig. 1 jeweils unten angeordneten, befüllten Taschen 14 des Revolvers 13 werden in einer Ausschubstation 18 aus den Taschen 14 ausgefördert. Hierzu werden Mitnehmer 19 eines zweibahnigen, als umlaufender Endlosförderer ausgebildeten Abförderers 20 quer zur Rotationsebene des Revolvers 13 entlang dieser unteren Taschen 14 bewegt, und zwar derart, dass die Mitnehmer 19 die Zigarettenformationen 11 unter Mitnahme derselben aus den Taschen 14 ausschieben. Die von den Mitnehmern 19 erfassten Zigarettenformationen 11 werden anschließend zur weiteren Handhabung in der Verpackungsmaschine weitergefördert.

In Rotationsrichtung des Revolvers 13 zwischen der Einschubstation 15 und der Ausschubstation 18 sind dem Revolver 13 jeweils zwei Prüfeinrichtungen 21 der Prüfvorrichtung 12 zugeordnet. Nur eine der Prüfeinrichtungen 21 ist in den Zeichnungen dargestellt.

Die Prüfeinrichtungen 21 sind in Rotationsrichtung zwischen der Einschubstation 15 und der Ausschubstation 20 derart ortsfest angeordnet, dass bei taktweiser Bewegung des Revolvers 13 jeweils eine Tasche 14 jeweils im Bereich einer der Prüfeinrichtungen 21 angeordnet ist. Die beiden Prüfeinrichtungen 21 sind jeweils mit ihrer Hauptblickrichtung auf die kreisförmigen Stirnseiten 24 der stabförmigen Filterenden 22 der Zigaretten 10 gerichtet. Denkbar ist auch die Anordnung weiterer Prüfeinrichtungen zur Erfassung der Tabakenden der jeweiligen Zigaretten 10 der Zigarettenformation 11.

Jede Prüfeinrichtung 21 umfasst ein elektrooptisches Prüforgan 23, im vorliegenden Fall eine Kamera, insbesondere eine CCD-Kamera. Über eine geeignete Spiegeloptik 46 wird die Hauptblickrichtung des Prüforgans 23 auf die Stirnseiten 24 der Zigarettenformation 11 gerichtet. Zur ausreichenden Beleuchtung der Zigarettenformation 11 ist eine Beleuchtungseinrichtung 25 mit zwei Beleuchtungsorganen 26 vorgesehen, nämlich im vorliegenden Fall LED-Blitzlichtlampen. Natürlich können auch andere Beleuchtungsorgane verwendet werden.

Die Prüfeinrichtungen 21 befinden sich zum Schutz jeweils in einem Gehäuse 27 mit einer vorderen, transparenten Wandung 28, im vorliegenden Fall einer Glasscheibe. Die Glasscheibe ist parallel zu den Stirnseiten 24 der Zigaretten 10 zwischen Spiegeloptik 46 und zu prüfender Zigarettenformation 11 ausgerichtet.

Die Prüfeinrichtungen 21 sind jeweils über eine Datenleitung 30 mit einer nicht dargestellten Auswerteeinrichtung verbunden. Bei der Auswerteeinrichtung handelt es sich um eine Computereinrichtung. Besonders wichtig ist nun die Durchführung der Prüfungen der Filterenden 22 der Zigaretten 10 der Zigarettenformation 11.

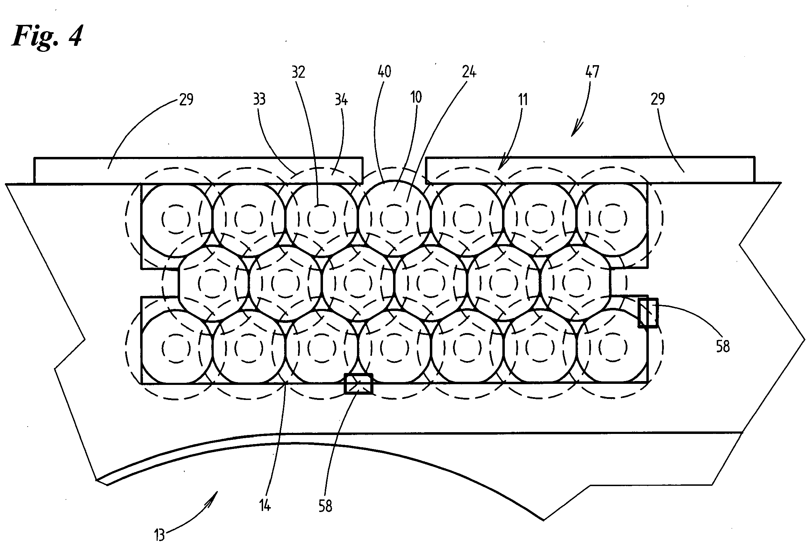

Jede der Prüfeinrichtungen 21 bzw. das jeweilige Prüforgan 23 nimmt jeweils ein bzw. mehrere Bilder 47 der Tasche 14 mit darin angeordneter, von ihr zu prüfender Zigarettenformation 11 auf, vgl. Fig. 4, 5, 7, 8. Die aufgenommenen Bilder 47 werden anschließend in elektronischer Form über das Datenkabel 30 an die Auswerteeinrichtung der Prüfvorrichtung 12 übertragen. Mindestens eines der übertragenen Bilder 47 wird in der nachfolgend näher beschriebenen Weise insbesondere im Hinblick auf Fehler der Zigaretten 10 der Zigarettenformation 11 ausgewertet.

Der tatsächliche Bildausschnitt, der dem in dieser Hinsicht auszuwertenden Bild 47 zugrunde gelegt wird, wird an die tatsächliche Lage der Tasche 14 des Revolvers 13 angepasst, um bei jedem Prüfvorgang jeweils gleiche Bildausschnitte zu garantieren. Zu diesem Zweck sind auf die Kanten der Taschen 14 gerichtete Nachführungsfenster 58 vorgesehen. In hier nicht näher beschriebener Weise wird unter Zuhilfenahme dieser Nachführungsfenster 58 der jeweiligen auszuwertenden Aufnahme des Bildes 47 immer der gleiche Bildausschnitt der Tasche 14 mit darin angeordneter Formation 11 zugrunde gelegt.

Im Rahmen der Auswertung des entsprechenden Bildes 47 bestimmt die Auswerteeinrichtung zunächst die Positionen der einzelnen Zigaretten 10 in dem Bild 47. Bei der Auswertung werden Soll- bzw. Referenzpositionen von Referenzzigaretten in dem Bild 47 verwendet. Diese Referenzpositionen beziehen sich auf ein Referenzbild, das von einer in der Tasche 14 angeordneten Muster- bzw. Referenzformation im Rahmen eines Referenzprüfvorgangs mit der Prüfvorrichtung 12 aufgenommen wurde. In diesem Referenzbild sind die Positionen der dort enthaltenen Referenzzigaretten bestimmt worden, genauer gesagt der Stirnseiten 24 der Referenzzigaretten. Diese bilden die Soll-Positionen der Zigarettenstirnseiten 24. Auf diese Weise werden insbesondere die Soll-Mittelpunkte der Zigarettenstirnseiten 24 bestimmt.

Nach Maßgabe der auf diese Weise ermittelten Soll-Positionen der Stirnseiten 24 in dem Bild 47 werden zu jeder einzelnen Soll-Position in dem aufgenommenen Bild Auswertelinien 31 definiert.

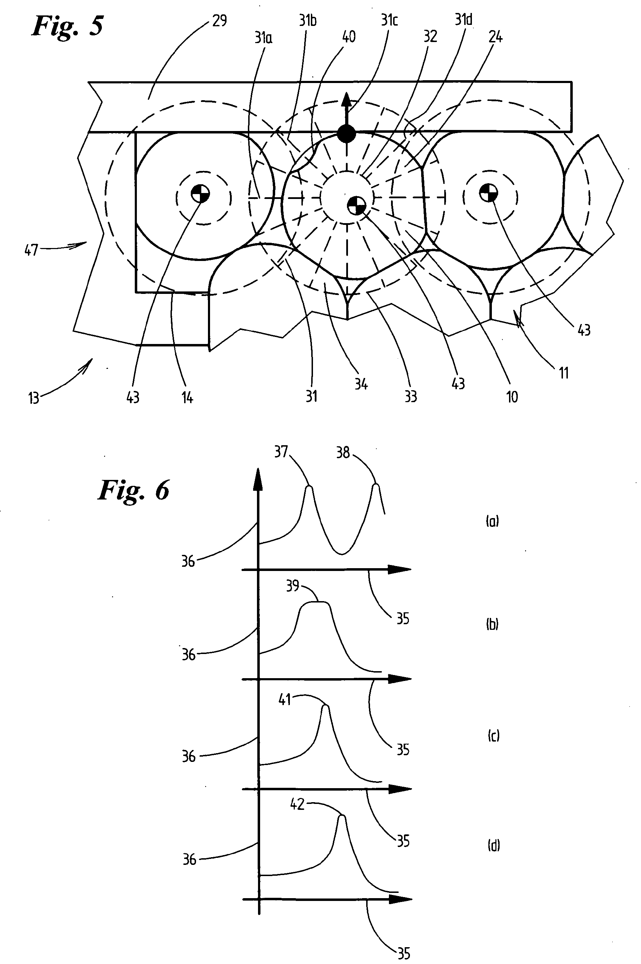

In Fig. 5 sind solche Auswertelinien 31 beispielhaft für die mittlere Zigarette 10 zu erkennen. Sie gehen aus von einem inneren Kreis 32 und erstrecken sich geradlinig bis zu einem äußeren, zu dem inneren Kreis 32 konzentrischen Kreis 33. Der innere Kreis 32 und der äußere Kreis 33 schließen einen ringförmigen Prüfbereich 34 ein, durch den sich die Auswertelinien 31 strahlenförmig bzw. radial von radial weiter innen nach radial weiter außen erstrecken.

In der Fig. 5 sind beispielhaft die einzelnen Auswertelinien 31 umlaufend jeweils mit gleichmäßigem Winkelabstand zueinander über den gesamten Prüfbereich 34 verteilt dargestellt, nämlich in Radialrichtung verlaufend ausgehend von dem inneren Kreis 32 zum äußeren Kreis 33.

Der ringförmige Prüfbereich 34 bzw. der diesen radial innen begrenzende innere Kreis 32 sowie der äußere Kreis 33 sind konzentrisch zu dem erwarteten Zentrum bzw. dem Soll-Mittelpunkt der Stirnseiten 24 der Zigaretten 10 angeordnet.

Der Durchmesser des inneren Kreises 32 und des äußeren Kreises 33 ist jeweils so gewählt, dass bezogen auf die Soll-Durchmesser der Stirnseiten 24 der innere Kreis 32 auf der Stirnseite 24 liegt, und zwar mit gewissem radialen Abstand zu der die Kontur der Stirnseite 24 bildenden Randkante 40 radial weiter innen als diese Randkante 40.

Der äußere Kreis 33 dagegen ist außerhalb der Stirnseite 24 angeordnet, das heißt in der (näheren) Umgebung der Stirnseite 24 mit gewissem Abstand zu der Randkante 40, sodass dieser die Stirnseite 24 mitsamt Randkante 40 in der Regel nicht schneidet.

Im Beispiel der Fig. 5 schneidet der äußere Kreis 33 dabei allerdings naturgemäß die in der Umgebung befindlichen, angrenzenden Stirnseite 24 der angrenzenden bzw. benachbarten Zigaretten 10 in der Formation 11.

Die Auswertung der Bildinformationen des aufgenommenen Bildes 47 erfolgt dann für jede einzelne Zigarette 10 entlang dieser jeweils über den inneren Kreis 32 und den äußeren Kreis 33 sowie die weiteren beschriebenen Bedingungen definierten Auswertelinien 31. Die Auswertelinien 31 sowie die zu deren Definition genannten Kreise 32, 33 müssen während der Auswertung des aufgenommenen Bildes durch die Auswerteeinrichtung nicht auf einem Bildschirm oder dergleichen, auf dem das ausgewertete Bild gegebenenfalls (aber ebenfalls nicht zwingend) dargestellt wird, angezeigt werden. Vielmehr kann die Auswertung theoretisch auch im Hintergrund ohne jegliche Anzeigemittel bzw. ohne jegliche Visualisierung der Auswertevorgänge ablaufen. Die Auswertelinien 31 bzw. die Prüfbereiche, die Kreise 32, 33 etc. dienen vornehmlich der mathematischen Beschreibung der Auswertevorgänge.

Im weiteren Ablauf wird zu jeder der Soll-Positionen der Zigarettenstirnseiten 24 der Zigaretten 10 der Zigarettenformation 11 in der beschriebenen Weise eine Anzahl solcher, den Soll-Positionen zugeordnete Auswertelinien 31 definiert.

Zur Ermittlung der tatsächlichen bzw. der Ist-Positionen der Zigarettenstirnseiten 24 in dem aufgenommenen Bild 47 werden nunmehr die Bildinformationen entlang der Auswertelinien 31 ausgewertet. Im vorliegenden Fall werden zu jeder Auswertelinie 31 die Helligkeitswerte der auf der jeweiligen Linie liegenden Bildeinheiten, bzw. im vorliegenden Fall Bildpunkten ortsaufgelöst erfasst. Eine Bildeinheit kann aus einem einzelnen Bildpunkt des Bildes bestehen oder auch aus mehreren, funktional zusammengehörenden Bildpunkten.

Fig. 6 zeigt verschiedene Diagramme (a)-(d), bei denen jeweils in einem Koordinatensystem auf der Abszisse 35 die Entfernung aufgetragen ist von jeweils auf den Auswertelinien 31a, b, c bzw. d in Fig. 5 angeordneten Bildpunkten von dem Soll-Mittelpunkt der dort zu erwartenden Zigarette 10. Auf der jeweiligen Ordinate 36 sind die zu jedem Bildpunkt auf den jeweiligen Auswertelinien 31a-31d gehörenden Helligkeitswerte der jeweiligen Bildpunkte aufgetragen.

Es entspricht das Diagramm (a) in Fig. 6 der entsprechenden Auswertung des Bildes 47 entlang der Auswertelinie 31a in Fig. 5, das Diagramm (b) der Auswertung entlang der Auswertelinie 31b in Fig. 5, das Diagramm (c) der Auswertung entlang der Auswertelinie 31c in Fig. 5 und das Diagramm (d) der Auswertung entlang der Auswertelinie 31d in Fig. 5.

Wie in Fig. 6 erkennbar ist, weist der Graph des Diagramms (a) in Fig. 6 zwei lokale Maxima 37, 38 der Helligkeit auf. Das erste Maximum 37 ergibt sich durch eine besonders starke Reflexion des von der Beleuchtungseinrichtung 25 auf die Zigarettenformation 11 gestrahlten Lichtes an der Randkante 40 der geprüften Zigarette 10. Das zweite Maximum 38 entspricht der entsprechenden Reflexion des Lichtes an der in Fig. 5 in derselben Zigarettenreihe bzw. -lage angeordneten Zigarette 10 links neben der geprüften Zigarette 10.

Das Diagramm (b), das einer Auswertung der Bildinformationen des Bildes 47 entlang der Auswertelinie 31b entspricht, weist ein Maximum 39 mit verbreitertem Plateau auf. Dieses verbreitete Plateau kommt durch eine Reflexion an einer umgeknickten Randkante 40 der Stirnseite 24 zustande.

Die Diagramme (c) sowie (d) zeigen ebenfalls lokale Helligkeitsmaxima an den entsprechenden Randkanten 40 der Zigarettenstirnseite 24.

Anhand der lokalen Maxima und gegebenenfalls weiterer Informationen können ortsaufgelöst, also relativ zu den Soll-Mittelpunkten der Zigaretten 10 in dem Bild 47, die Positionen der verschiedener Punkte der Kontur bzw. verschiedener Punkte auf der kreisförmigen Randkante 40 der Stirnseite 24 ermittelt werden. Im vorliegenden Fall können mindestens die zu den lokalen Maxima 37, 39, 41, 42 gehöhrenden Positionen der entsprechenden, auf der Randkante 48 liegenden Punkte der Stirnseite 24 ermittelt werden.

Solche Randpunkte können auf diese Weise von den Abbildern sämtlicher Stirnseiten 24 sämtlicher Zigaretten 10 der Formation 11 innerhalb des Bildes 47 bestimmt werden.

Im weiteren Schritt wird mittels bekannter mathematischer Verfahren mithilfe der ermittelten Randpunkte ein Kreis bestimmt, der sich durch die Randpunkte erstreckt. Hierzu kann beispielsweise die bekannte Hough-Transformation verwendet werden.

Je mehr Randpunkte erkannt werden bzw. je mehr Auswertelinien 31 dabei verwendet werden, desto genauer wird die Kreisbestimmung sein. Sich im Rahmen der Randpunktenermittlung durch bestimmte Effekte ergebene statistische Ausreißer beeinflussen die Genauigkeit des erzielbaren Ergebnisses umso weniger, je mehr Auswertelinien verwendet werden. Gegebenenfalls können statistische Ausreißer auch schlicht unbeachtet bleiben, um das Ergebnis zu verbessern.

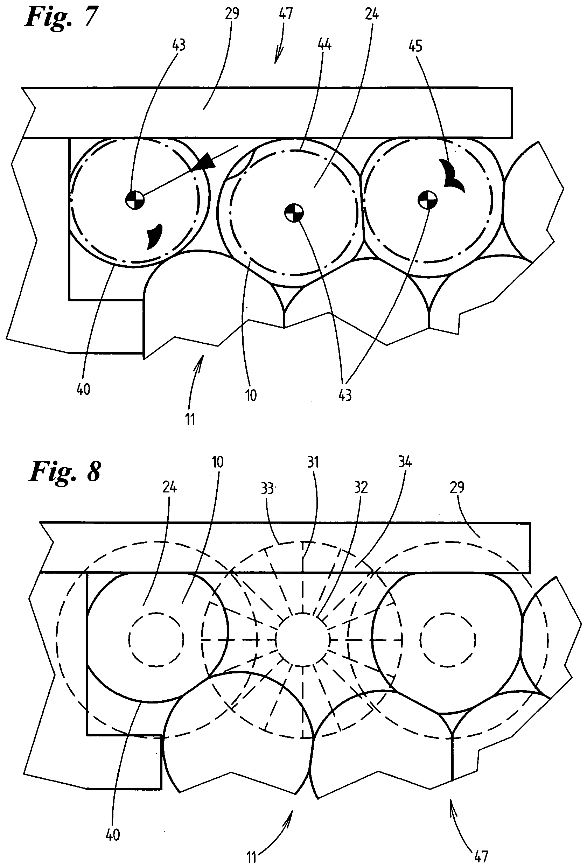

Bei der Berechnung des Kreises, der sich durch die ermittelten Randkanten der Zigarettenkonturen erstreckt, kann es zu Unplausibilitäten kommen. Beispielsweise bei Fehlen einer Zigarette in der Formation 11 (Fig. 8), würde die Auswertung entlang der Auswertelinien 31 ausschließlich Helligkeitsmaxima ergeben, die sich aus Reflexionen an Randkanten der Nachbarzigaretten 10 ergeben. In diesem Fall würde es nicht möglich sein, mittels eines entsprechenden mathematischen Kreisberechnungsverfahrens einen Kreis zu berechnen, der sich durch sämtliche ermittelten Randpunkte erstreckt. Eine solche Konstellation würde die Auswerteinrichtung als das Fehlen einer Zigarette in der Zigarettenformation 11 erkennen.

Der Mittelpunkt 43 des errechneten Kreises entspricht dem tatsächlichen Mittelpunkt der Stirnseite 24 in dem aufgenommenen Bild 47.

In analoger Weise können die tatsächlichen Mittelpunkte 43 sämtlicher Zigaretten 10 in dem aufgenommenen Bild 47 ermittelt werden.

Im nächsten Auswerteschritt wird nun für jede Zigarette 10 in dem aufgenommenen Bild 47 um den tatsächlich ermittelten Mittelpunkt 43 jeweils ein im vorliegenden Fall kreisförmiges Prüffenster 44 gelegt. Der Durchmesser des kreisförmigen Prüffensters 44 wird dabei etwas kleiner gewählt als der Durchmesser der Stirnseite 24 der jeweiligen Zigarette 10. Auf diese Weise ist sichergestellt, dass sich das gesamte Prüffenster 44 auf der Stirnseite 24 befindet.

In diesem Prüffenster 44 wird die Oberfläche der Stirnseite 24 mittels üblicher Bildauswerteverfahren auf Fehler geprüft. Beispielsweise können in dem Prüffenster schlicht Hell-Dunkel-Vergleiche der einzelnen Bildpunkte vorgenommen werden, um Verschmutzungen 45 auf der Oberfläche der Stirnseite 24 zu erkennen.

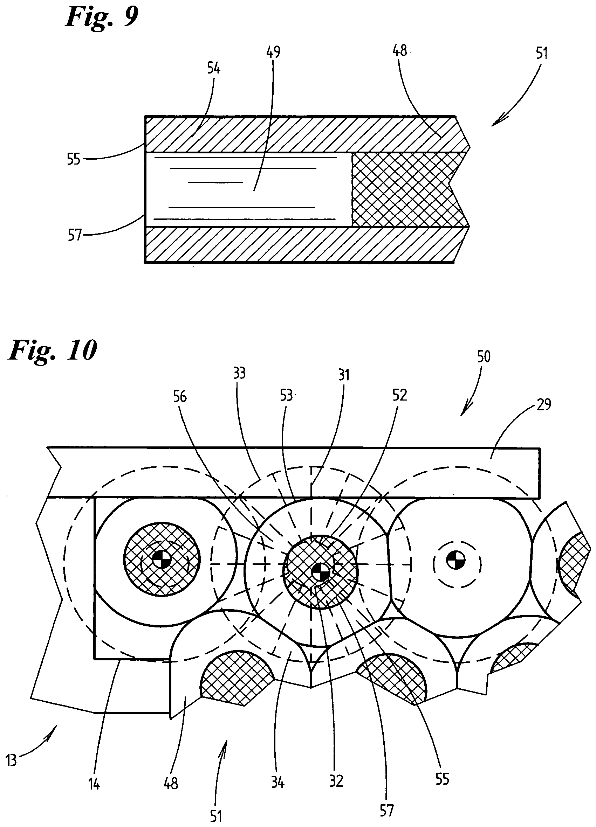

Die Fig. 9, 10 zeigen ein weiteres Ausführungsbeispiel der Erfindung. Es unterscheidet sich von dem oben beschriebenen Ausführungsbeispiel unter anderem durch die Art der zu prüfenden Zigaretten. In den Fig. 9, 10 werden Hohlfilterzigaretten 48 geprüft. Die Stirnseite 55 des Filterendes 54 einer solchen Hohlfilterzigarette 48 weist ein zentrale Öffnung 57 auf, die in Axialrichtung nach Innen in eine zentrale, hohlzylindrische Freimachung 49 übergeht, sowie eine die Öffnung 57 radial außen begrenzende, ringförmige Teilfläche 56. Die ringförmige Teilfläche 56 wird radial außen durch eine kreisförmige Randkante 53 begrenzt, radial innen durch eine an die Öffnung 57 angrenzende, kreisförmige Randkante 52.

In Fig. 10 ist ein von einer entsprechenden Formation 51 von Hohlfilterzigaretten 48 aufgenommenes Bild 50 gezeigt. Die Auswertung des Bildes 50 entlang der Auswertelinien 31 erfolgt im Hinblick auf die beiden Randkanten 52, 53. Zum einen soll demnach die die Öffnung 57 begrenzende, innere, umlaufende Randkante 52 der Stirnseite 55 erkannt werden, zum anderen die äußere Filterrandkante 53.

Der Durchmesser des inneren Kreises 32, auf dem ähnlich wie bei dem Ausführungsbeispiel der Fig. 1-8 die Auswertelinien 31 beginnen, wird bei der Prüfung der Hohlfilterzigaretten 48 so gewählt, dass er in der Freimachung 49 bzw. in der Öffnung 57 der Stirnseite 55 zu liegen kommt. Der Durchmesser des äußeren Kreises dagegen wird - wie bei den Zigaretten 10 des vorherigen Ausführungsbeispieles - derart gewählt, dass er in der Umgebung der Hohlfilterzigarette 48 zu liegen kommt.

Die Auswertung der Helligkeitsinformationen der Bildpunkte entlang der Auswertelinien 31 ergibt für jede Hohlfilterzigarette 48 jeweils zwei Helligkeitsmaxima. Ein Helligkeitsmaximum entspricht der Streuung des von der Beleuchtungseinrichtung 25 eingestrahlten Lichtes an der die Öffnung 57 begrenzenden, umlaufenden, inneren Öffnungskante 52. Das andere Helligkeitsmaximum entspricht der Streuung des Lichtes an der äußeren Filterrandkante 53.

Das Prüffenster, in dem die innen an die Öffnung 57 angrenzende, ringförmige Stirnseitenteilfläche 56 der kreisförmigen Stirnseite 55 beispielsweise auf Verschmutzung geprüft wird, kann in diesem Fall ebenfalls ringförmig ausgebildet sein. Dieser Prüffensterring würde so gewählt werden, dass er entsprechend auf der ringförmige Filterteiloberfläche 56 der Stirnseite 55 des Filterendes 54 zu liegen kommt.

Bei beiden beschriebenen Ausführungsbeispielen werden abhängig von den Ergebnissen der durchgeführten Prüfungen der Zigarettenstirnseiten Maßnahmen getroffen. Wenn beispielsweise Verschmutzungen oder andere Produktfehler erkannt werden, können die betroffenen Zigaretten oder die betroffene Zigarettenformation ausgeschleust werden.

**Bezugszeichenliste**

| | | | |
|---|---|---|---|
| 10 | Zigaretten | 35 | Abszisse |
| 11 | Formation | 36 | Ordinate |
| 12 | Prüfvorrichtung | 37 | Maximum |
| 13 | Revolver | 38 | Maximum |
| 14 | Tasche | 39 | Maximum |
| 15 | Einschubstation | 40 | Randkante |
| 16 | Zigarettenmagazin | 41 | Maximum |
| 17 | Schächte | 42 | Maximum |
| 18 | Ausschubstation | 43 | Mittelpunkt |
| 19 | Mitnehmer | 44 | Prüffenster |
| 20 | Abförderer | 45 | Verschmutzung |
| 21 | Prüfeinrichtung | 46 | Spiegeloptik |
| 22 | Filterende | 47 | Bild |
| 23 | Prüforgan | 48 | Hohlfilterzigarette |
| 24 | Stirnseite | 49 | Freimachung |
| 25 | Beleuchtungseinrichtung | 50 | Bild |
| 26 | Beleuchtungsorgan | 51 | Formation |
| 27 | Gehäuse | 52 | Öffnungskante |
| 28 | Transparente Wandung | 53 | Randkante Filter |
| 29 | Halteblech | 54 | Filterende |
| 30 | Datenleitung | 55 | Stirnseite |
| 31 | Auswertelinie | 56 | Stirnseitenteilfläche |
| 31a | Auswertelinie | 57 | Öffnung |
| 31b | Auswertelinie | 58 | Nachführungsfenster |
| 31c | Auswertelinie | | |
| 31d | Auswertelinie | | |
| 32 | innerer Kreis | | |
| 33 | äußerer Kreis | | |
| 34 | Prüfbereich | | |

## Patentansprüche

1. Verfahren zum Prüfen von Produkten (10, 48) der Tabakindustrie mit jeweils im Wesentlichen kreisförmiger Stirnseitenkontur (40, 53), insbesondere Zigaretten, bei dem mittels eines elektrooptischen Prüforgans (23), bevorzugt einer Kamera, ein elektronisches Bild der Stirnseite (24, 55) mindestens eines Produktes (10, 48) aufgenommen wird, wobei das aufgenommene Bild (47, 50) zur Erkennung des Produktes (10, 48) in dem Bild (47, 50) ausgewertet wird, **dadurch gekennzeichnet, dass** durch die Auswertung von Bildinformationen des aufgenommenen Bildes (47, 50) entlang von mindestens drei Auswertelinien (31), die sich jeweils von einer inneren Bildposition (32), an der in dem Bild (47, 50) die Stirnseite (24, 55) des Produktes (10, 48) erwartet wird, bis zu einer äußeren Bildposition (33) erstrecken, an der in dem Bild (47, 50) die Umgebung der Stirnseite (24, 55) des Produktes (10, 48) erwartet wird, auf den Auswertelinien (31) liegende Randpunkte der Stirnseitenkontur (40, 53) des Produktes (10, 48) ermittelt werden, wobei aus mindestens drei ermittelten Randpunkten der Mittelpunkt (43) eines sich durch die Randpunkte erstreckenden Kreises errechnet wird.

2. Verfahren gemäß Anspruch 1, **dadurch gekennzeichnet, dass** nach Maßgabe des errechneten Kreismittelpunktes (43) ein Prüffenster (44) festgelegt wird, in dem das aufgenommene Bild (47, 50) im Hinblick auf Produktfehler ausgewertet wird.

3. Verfahren gemäß Anspruch 1 oder 2, **dadurch gekennzeichnet, dass** sich die Aüswertelinien (31) von einem inneren Kreis (32), der in einem Bildbereich angeordnet ist, in dem die Stirnseite (24, 55) des Produktes (10, 48) erwartet wird, bis zu einem insbesondere konzentrisch zum inneren Kreis (32) angeordneten, äußeren Kreis (33) erstrecken, der in einem Bildbereich angeordnet ist, in dem die Stirnseitenumgebung des Produktes (10, 48) erwartet wird.

4. Verfahren gemäß Anspruch 3, **dadurch gekennzeichnet, dass** der innere Kreis (32) und der äußere Kreis (33) einen gemeinsamen Mittelpunkt aufweisen, der einem erwarteten Mittelpunkt der Stirnseite (24, 55) des Produktes (10, 48) entspricht.

5. Verfahren gemäß einem oder mehreren der vorhergehenden Ansprüche, **dadurch gekennzeichnet, dass** die Auswertelinien (31) geradlinig ausgebildet sind.

6. Verfahren gemäß einem oder mehreren der vorhergehenden Ansprüche 2-5, **dadurch gekennzeichnet, dass** sich die Auswertelinien (31) von dem inneren Kreis (32) zu dem äußeren Kreis (33) erstrecken.

7. Verfahren gemäß einem oder mehreren der vorhergehenden Ansprüche 2-6, **dadurch gekennzeichnet, dass** der Durchmesser des inneren Kreises (32) kleiner ist als eine zentrale Öffnung (57) in der Stirnseite (55) des Produktes (48).

8. Verfahren gemäß einem oder mehreren der vorhergehenden Ansprüche, **dadurch gekennzeichnet, dass** ein Bild (47, 50) der Stirnseiten (24, 55) einer Formation (11, 51) von Produkten (10, 48) aufgenommen wird, wobei für jedes Produkt (10, 48) der Formation (11, 51) eine Prüfung gemäß Anspruch 1 durchgeführt wird.

9. Verfahren gemäß Anspruch 8, **dadurch gekennzeichnet, dass** die Auswertung von Bildinformationen für ein Produkt (10, 48), das in einer Position in der Produktformation (11) mit weniger unmittelbar benachbarten Produktnachbarn (10, 48) angeordnet ist, entlang einer kleineren Anzahl von Auswertelinien (31) erfolgt als für ein Produkt (10, 48), das in einer Position in der Produktformation (10, 48) mit mehr unmittelbar benachbarten Produktnachbarn angeordnet ist.

10. Verfahren gemäß einem oder mehreren der vorhergehenden Ansprüche, **dadurch gekennzeichnet, dass** die auszuwertenden Bildinformationen Helligkeitsinformationen und/oder Farbinformationen und/oder Tiefeninformationen sind.

11. Verfahren gemäß einem oder mehreren der vorhergehenden Ansprüche, **dadurch gekennzeichnet, dass** für die Bestimmung der Randpunkte der Stirnseitenkontur (40, 53) aus den Bildinformationen in einem Diagramm und/oder einer Tabelle zu verschiedenen, auf den Auswertelinien (31) angeordneten Bildpositionen die der jeweiligen Bildposition zugeordneten Bildformationen gegenübergestellt werden, und dass die zugeordneten Bildinformationen im Hinblick auf lokale Maxima oder Minima ausgewertet werden.

12. Verfahren gemäß Anspruch 8 oder 9, **dadurch gekennzeichnet, dass** eine in der Tasche (14) eines rotierend angetriebenen Revolvers (13) angeordnete Zigarettenformation (11, 51) geprüft wird, insbesondere auf Vollzähligkeit der Formation (11, 51) und/oder auf Verunreinigungen der Stirnseiten (24, 55) der einzelnen Zigaretten (10, 48) der Formation (11, 51).

13. Vorrichtung zum Prüfen von Produkten (10, 48) der Tabakindustrie mit jeweils im Wesentlichen kreisförmiger Stirnseitenkontur, insbesondere Zigaretten, insbesondere zur Durchführung des Verfahrens gemäß Anspruch 1, mit einem elektrooptischen Prüforgan (23), bevorzugt einer Kamera, mit der ein elektronisches Bild (47, 50) der Stirnseite (24, 55) mindestens eines Produktes (10, 48) aufnehmbar ist, und mit einer Auswerteeinrichtung, mit der das aufgenommen Bild (47, 50) auswertbar ist im Hinblick auf eine Erkennung des Produktes (10, 48) in dem aufgenommenen Bild (47, 50), **dadurch gekennzeichnet, dass** die Auswerteeinrichtung derart ausgebildet ist, dass durch Auswertung von Bildinformationen des aufgenommenen Bildes (47, 50) entlang von mindestens drei Auswertelinien (31), die sich jeweils von einer inneren Bildposition (32), an der in dem Bild (47) die Stirnseite (24, 55) des Produktes (10, 48) erwartet wird, bis zu einer äußeren Bildposition (33) erstrecken, in der in dem Bild (47, 50) die Umgebung der Stirnseite (24, 55) des Produktes (10, 48) erwartet wird, auf den Auswertelinien (31) liegende Randpunkte der Kontur (40, 53) der Stirnseite (24, 55) des Produktes (10, 48) ermittelbar sind, wobei aus mindestens drei ermittelten Randpunkten der Mittelpunkt (43) eines sich durch die Randpunkte erstreckenden Kreises errechnet wird.

## Claims

1. A method for checking products (10, 48) of the tobacco industry having in each case a substantially circular front-end contour (40, 53), in particular cigarettes, in which an electro-optical check element (23), preferably a camera, is used to record an electronic image of the front end (24, 55) of at least one product (10, 48), wherein the recorded image (47, 50) is evaluated for identification of the product (10, 48) in the image (47, 50), **characterized in that,** by evaluating image information of the recorded image (47, 50) along at least three evaluation lines (31), which extend in each case from an inner image position (32), at which the front end (24, 55) of the product (10, 48) is expected in the image (47, 50), up to an outer image position (33), at which the area surrounding the front end (24, 55) of the product (10, 48) is expected in the image (47, 50), boundary points of the front-end contour (40, 53) of the product (10, 48) located on the evaluation lines (31) are ascertained, wherein the centre point (43) of a circle extending through the boundary points is calculated from at least three ascertained boundary points.

2. The method as claimed in claim 1, **characterized in that** a check window (44) is fixed according to the calculated circle centre point (43), in which check window the recorded image (47, 50) is evaluated with respect to product defects.

3. The method as claimed in claim 1 or 2, **characterized in that** the evaluation lines (31) extend from an inner circle (32), which is arranged in an image region in which the front end (24, 55) of the product (10, 48) is expected, up to an outer circle (33), which is arranged in particular concentrically with respect to the inner circle (32) and is arranged in an image region, in which the area surrounding the front end of the product (10, 48) is expected.

4. The method as claimed in claim 3, **characterized in that** the inner circle (32) and the outer circle (33) have a shared centre point, which corresponds to an expected centre point of the front end (24, 55) of the product (10, 48).

5. The method as claimed in one or more of the preceding claims, **characterized in that** the evaluation lines (31) are configured to be in a straight line.

6. The method as claimed in one or more of the preceding claims 2-5, **characterized in that** the evaluation lines (31) extend from the inner circle (32) to the outer circle (33).

7. The method according to one or more of the preceding claims 2-6, **characterized in that** the diameter of the inner circle (32) is smaller than a central opening (57) in the front end (55) of the product (48).

8. The method as claimed in one or more of the preceding claims, **characterized in that** an image (47, 50) of the front ends (24, 55) of a formation (11, 51) of products (10, 48) is recorded, wherein a check as claimed in claim 1 is carried out for each product (10, 48) of the formation (11, 51).

9. The method as claimed in claim 8, **characterized in that** the evaluation of image information for a product (10, 48) which is arranged at a position in the product formation (11) having fewer directly neighbouring product neighbours (10, 48), takes place along a smaller number of evaluation lines (31) than for a product (10, 48) which is arranged at a position in the product formation (10, 48) having more directly neighbouring product neighbours.

10. The method as claimed in one or more of the preceding claims, **characterized in that** the image information to be evaluated are brightness information and/or colour information and/or depth information.

11. The method as claimed in one or more of the preceding claims, **characterized in that** for the determination of the boundary points of the front-end contour (40, 53), on the basis of the image information, the image formations assigned to the respective image position is compared in a diagram and/or a table relating to the various image positions arranged on the evaluation lines (31), and **in that** the assigned image information is evaluated in respect of local maxima or minima.

12. The method as claimed in claim 8 or 9, **characterized in that** a cigarette formation (11, 51) arranged in the pocket (14) of a turret (13) driven in rotation is checked, in particular relating to the completeness of the formation (11, 51) and/or of dirt on the front ends (24, 55) of the individual cigarettes (10, 48) of the formation (11, 51).

13. An apparatus for checking products (10, 48) of the tobacco industry having in each case a substantially circular front-end contour, in particular cigarettes, in particular for carrying out the method as claimed in claim 1, having an electro-optical check element (23), preferably a camera, with which an electronic image (47, 50) of the front end (24, 55) of at least one product (10, 48) is recordable, and having an evaluation device, with which the recorded image (47, 50) is evaluable with respect to an identification of the product (10, 48) in the recorded image (47, 50), **characterized in that** the evaluation device is configured such that, by evaluating image information of the recorded image (47, 50) along at least three evaluation lines (31), which extend in each case from an inner image position (32), at which the front end (24, 55) of the product (10, 48) is expected in the image (47), up to an outer image position (33), at which the area surrounding the front end (24, 55) of the product (10, 48) is expected in the image (47, 50), boundary points of the contour (40, 53) of the front end (24, 55) of the product (10, 48) located on the evaluation lines (31) are ascertainable, wherein the centre point (43) of a circle extending through the boundary points is calculated from at least three ascertained boundary points.

## Revendications

1. Procédé destiné à tester des produits (10, 48) provenant de l'industrie du tabac, ayant chacun un contour de face frontale (40, 53) sensiblement circulaire, notamment des cigarettes, lors duquel, au moyen d'un organe testeur (23) électro-optique, de préférence une caméra, on enregistre une image électronique de la face frontale (24, 55) d'au moins un produit (10, 48), l'image (47, 50) enregistrée étant évaluée pour l'identification du produit (10, 48) dans l'image (47, 50), **caractérisé en ce que** par l'évaluation d'informations d'image de l'image (47, 50) enregistrée le long d'au moins trois lignes d'évaluation (31), qui s'étendent respectivement d'une position intérieure (32) d'image, sur laquelle on attend dans l'image (47, 50) la face frontale (24, 55) du produit (10, 48) jusqu'à une position extérieure (33) d'image, sur laquelle on attend dans l'image (47, 50) l'environnement de la face frontale (24, 55) du produit (10, 48), on détermine des points de bordure du contour de la face frontale (40, 53) du produit (10, 48), situés sur les lignes d'évaluation (31), à partir d'au moins trois points de bordure déterminés, le point moins trois points de bordure déterminés, le point central (43) d'un cercle s'étendant à travers les points de bordure étant calculé.

2. Procédé selon la revendication 1, **caractérisé en ce que** selon les critères du point central du cercle (43) calculé, on fixe une fenêtre de test (44) dans laquelle on évalue l'image (47, 50) enregistrée au niveau de défauts du produit.

3. Procédé selon la revendication 1 ou 2, **caractérisé en ce que** les lignes d'évaluation (31) s'étendent d'un cercle intérieur (32), qui est placé dans une zone d'image dans laquelle on attend la face frontale (24, 55) du produit (10, 48) jusqu'à un cercle extérieur (33), placé notamment de manière concentrique par rapport au cercle intérieur (32), qui est placé dans une zone d'image dans laquelle on attend l'environnement de la face frontale du produit (10, 48).

4. Procédé selon la revendication 3, **caractérisé en ce que** le cercle intérieur (32) et le cercle extérieur (33) comportent un point central commun qui correspond à un point central attendu de la face frontale (24, 55) du produit (10, 48).

5. Procédé selon l'une quelconque ou plusieurs des revendications précédentes, **caractérisé en ce que** les lignes d'évaluation (31) sont conçues de forme rectiligne.

6. Procédé selon l'une quelconque ou plusieurs des revendications précédentes 2 à 5, **caractérisé en ce que** les lignes d'évaluation (31) s'étendent du cercle intérieur (32) vers le cercle extérieur (33) .

7. Procédé selon l'une quelconque ou plusieurs des revendications précédentes 2 à 6, **caractérisé en ce que** le diamètre du cercle intérieur (32) est inférieur à un orifice central (57) dans la face frontale (55) du produit (48).

8. Procédé selon l'une quelconque ou plusieurs des revendications précédentes, **caractérisé en ce qu'**on enregistre une image (47, 50) des faces frontales (24, 55) d'une formation (11, 51) de produits (10, 48), pour chaque produit (10, 48) de la formation (11, 51) un test étant réalisé selon la revendication 1.

9. Procédé selon la revendication 8, **caractérisé en ce que** l'évaluation d'informations d'image pour un produit (10, 48), qui dans la formation de produits (11) est placé dans une position avec moins de produits avoisinants (10, 48) directement voisins, s'effectue le long d'un nombre plus réduit de lignes d'évaluation (31) que pour un produit (10, 48), qui dans la formation de produits (10, 48) est placé dans une position avec plus de produits avoisinants directement voisins.

10. Procédé selon l'une quelconque ou plusieurs des revendications précédentes, **caractérisé en ce que** les informations d'image qui doivent être évaluées sont des informations de luminosité et/ou des informations de couleur et/ou des informations de profondeur.

11. Procédé selon l'une quelconque ou plusieurs des revendications précédentes, **caractérisé en ce que** pour la détermination des points de bordure du contour de la face frontale (40, 53) à partir des informations d'image, dans un diagramme et/ou dans un tableau, l'information d'image associée à la position d'image concernée est confrontée à différentes positions d'image placées sur les lignes d'évaluation (31) et **en ce que** l'information d'image associée au niveau de maxima et de minima locaux est évaluée.

12. Procédé selon la revendication 8 ou 9, **caractérisé en ce qu'**on teste une formation de cigarettes (11, 51) placée dans le barillet (14) d'un revolver (13) entraîné en rotation, notamment au niveau de l'exhaustivité de la formation (11, 51) et/ou d'impuretés sur les faces frontales (24, 55) des cigarettes (10, 48) individuelles de la formation (11, 51).

13. Dispositif destiné à tester des produits (10, 48) provenant de l'industrie du tabac, ayant chacun un contour de face frontale sensiblement circulaire, notamment des cigarettes, notamment destiné à réaliser le procédé selon la revendication 1, avec un organe testeur (23) électro-optique, de préférence une caméra, susceptible d'enregistrer une image (47, 50) de la face frontale (24, 55) d'au moins un produit (10, 48) et avec un système d'évaluation, permettant d'évaluer l'image (47, 50) enregistrée au niveau d'une identification du produit (10, 48) dans l'image (47, 50) enregistrée, **caractérisé en ce que** le système d'évaluation est conçu de telle sorte que pour évaluer des informations d'image de l'image (47, 50) enregistrée, le long d'au moins trois lignes d'évaluation (31), qui s'étendent respectivement d'une position intérieure (32) d'image dans laquelle on attend dans l'image (47) la face frontale (24, 55) du produit (10, 48) jusqu'à une position extérieure (33) de l'image, dans laquelle on attend dans l'image (47, 50) l'environnement de la face frontale (24, 55) du produit (10, 48), des points de bordure du contour (40, 53) de la face frontale (24, 55) du produit (10, 48), situés sur les lignes d'évaluation (31) soient déterminables, à partir d'au moins trois points de bordure déterminés, le point central (43) d'un cercle s'étendant à travers les points de bordure étant calculé.
